# EUROPÄISCHE PATENTSCHRIFT

(11) **EP 2 390 068 B1**
(45) Veröffentlichungstag und Bekanntmachung des Hinweises auf die Patenterteilung: **30.01.2013**
(21) Anmeldenummer: 11164897.8
(22) Anmeldetag: 05.05.2011
(51) Int. Cl.: B25J 15/10

(54) **Greifer mit in der Ebene des auszunehmenden Werkstücks verschwenkbaren Klemmschwingen**
Gripper with clamp rockers which can be rotated in the level of the workpiece to be held
Poignée dotée d'oscillations de serrage basculant dans la surface de la pièce usinée devant être sortie

(30) Priorität: 05.05.2010 DE 102010019348
(43) Veröffentlichungstag der Anmeldung: 30.11.2011
(73) Patentinhaber: Schunk GmbH & Co. KG Spann- und Greiftechnik, 74348 Lauffen am Neckar (DE)
(72) Erfinder: Maul, Hans-Erich, 52068 Aachen (DE)
(74) Vertreter: Dreiss

(56) Entgegenhaltungen:
- EP-A1- 0 170 479
- WO-A1-98/50223
- DE-A1- 2 841 528
- JP-A- 4 240 085
- US-A1- 2006 174 760

## Beschreibung

In der Automation, der Robotik und Handhabungstechnik werden die verschiedensten Greifer zum Handhaben von Werkstücken verwendet. Unterschieden wird hauptsächlich nach der Führung und der Bewegung der Greiferspannbacken.

Es sind pneumatisch wirkende parallele Greifer, schwenkende in der Achsebene und auch schwenkende in der Ebene des Radius eines vorzugsweise ring- oder kreisscheibenförmigen Werkstücks in der Anwendung.

Besondere Vorteile eines großen Hubbereiches haben schwenkende Greifer in der Ebene des Radius. Bei solchen Greifern liegen die Bewegungsradien der verschwenkbaren Greiferbacken bzw. Klemmschwingen in einer gemeinsamen Ebene. Zudem verlaufen die Schwenkachsen parallel zur Mittenachse des Greifers. Ein solcher Greifer ist aus der DE 2 841 528 A1 bekannt.

Ebenfalls ist der Dreibackengreifer der Fa. Sommer Automation, Serie GD bekannt. Dieser hat, in der Ebene des Radius des vorzugsweise ring- oder kreisscheibenförmigen Werkstücks drei Planetenförmig schwenkende Greifbacken die von einen Planetengetriebe gedreht und von einem pneumatischen Schwenkzylinder angetrieben werden. Vorteil dieses Greifers ist der verhältnismäßig große Spannbereich von 9 bis 62 mm Außengreifend und 21 bis 74 mm Innengreifend. Nachteile sind geringe Spannkräfte, großer Bauraum, großer Getriebetechnischer Aufwand und ein geringer Schwenkwinkel. Besonderer Nachteil ist der Antrieb mit einem Planetengetriebe welches keine kraftverstärkende (z.B.: Kniehebelsystem) Mechanik aufweist und der Schwenkzylinder eine kleine Kolbenfläche und nur einen kleinen Schwenkwinkel hat.

Unter der Anmeldung DE 10 2006 031 477 B4 ist ein System bekannt welches zum Antrieb einer Schwenkbewegung verwendet wird. Dort wird ein an Verdrehen gehinderter Kolben verschoben und dadurch eine Schwenkbewegung mittels einer Spirale ausgeführt.

Der Erfindung liegt die Aufgabe zugrunde, einen Greifer bereits zu stellen, bei dem die Klemmschwingen in der Ebene des zu greifenden Werkstücks verschwenkbar sind und der einen großen Hubbereich im Verhältnis zur Baugröße aufweist und dennoch funktionssicher auf einfache Art und Weise arbeitet.

Diese Aufgabe wird durch einen Greifer mit den Merkmalen des Anspruchs 1 gelöst.

Es ist folglich vorgesehen, dass mit den Klemmschwingen drehgekoppelte Gewindespindeln vorgesehen sind, die durch einen Innengewinde für die Gewindespindeln vorsehenden Kolben derart hindurchgeführt werden, dass bei einer axialer Bewegung des Kolbens die Spindeln zur Spannung des Werkstücks in Drehung gebracht werden und vorzugsweise gleichzeitig der Kolben an einer Drehbewegung gehindert wird.

Zum Greifen von kleinen Werkstücken kann vorgesehen sein, dass der Hebelarm der Klemmschwingen gleich dem Abstand der Mittenachse des Greifers zu den Drehachsen der Gewindespindeln ist, so dass die Richtung der Spannkraft am Angriffspunkt der Greiferbacken auf das Werkstück in der Mittenachse des Greifers radial liegt. Dadurch wirkt die Spannkraft bis zu Werkstückdurchmessern gleich dem Teilkreisdurchmesser eines durch die Gewindespindeln verlaufenden Kreises fast konstant und ein Spannbereich bis zum Werkstückdurchmesser null wird möglich.

Ferner ist denkbar, dass bei Greifern mit großem Schwenkwinkel der Klemmschwingen und einem Spannbereich größer als der Teilkreisdurchmesser eines durch die Gewindespindeln verlaufenden Kreises vorgesehen ist, dass die Klemmschwingen als Kniehebel dann so ausgebildet sind, dass sie als Kniehebelsystem auf das Werkstück wirken, so dass sie bei großen Werkstückdurchmessern eine Kraftsteigerung erzeugen.

Weitere vorteilhafte Ausgestaltungen sind den Unteransprüchen zu entnehmen.

Weitere Vorteile und vorteilhafte Ausgestaltungen sind zudem der nachfolgenden Beschreibung zu entnehmen, anhand derer in den Figuren gezeigte Ausführungsbeispiele der Erfindung näher beschrieben werden.
Fig. 1: zeigt einen Greifer ohne Gehäuse und ohne Deckel mit Werkstück gespannt von den drei Spannbacken und den Kolben mit den durchgeführten Gewindespindeln.

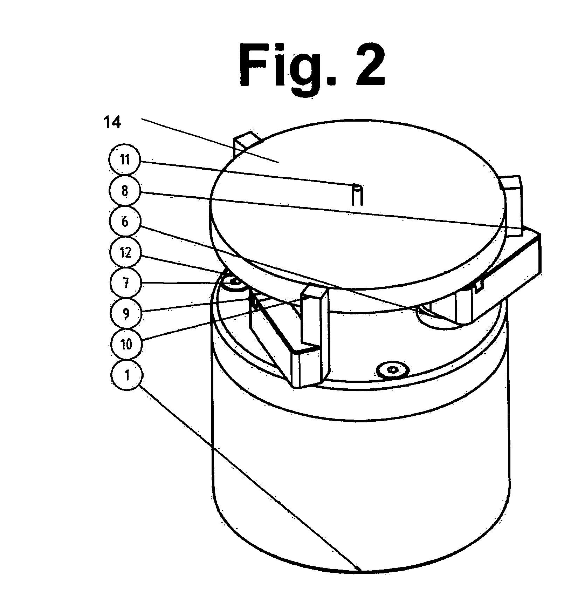

Fig. 2: zeigt einen Greifer mit einem großen Werkstück gespannt von den drei Spannbacken.
Fig. 3: zeigt einen Greifer ohne Werkstück mit den auf geschwenkten Spannbacken in der Draufsicht.
Fig. 4: zeigt einen Greifer ohne Werkstück mit den zu geschwenkten Spannbacken in der Draufsicht.

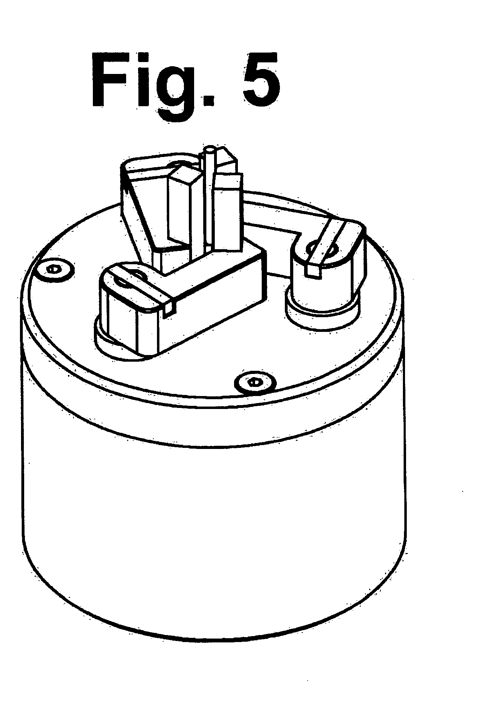

Fig. 5: zeigt einen Greifer mit einem kleinen Werkstück gespannt von den drei Spannbacken.
Fig. 6: Das Spannkraftdiagramm mit dem Verlauf der Spannkraft in Abhängigkeit vom Werkstückdurchmesser.

Das in den Figuren gezeigte Greifersystem hat mit einer schwenkenden Bewegung der Greiferspannbacken 8 in der Ebene des Radius eines vorzugsweise ring- oder kreisscheibenförmigen Werkstücks 14 einen großen Hubbereich im Verhältnis zur Baugröße. Außerdem eine sehr große Spannkraft der Werkstücke.

Dies wird erreicht durch planetenartig angeordnete Steilgewindespindeln 3 die im Dreieck angeordnet sind und durch einen Pneumatikkolben 4 mit Steilinnengewinden hindurchgeführt sind. Dabei verhindert die dreieckige Anordnung der Spindeln 3 gleichzeitig ein Verdrehen des Pneumatikkolbens. Die freien Enden der Steilgewindespindeln sind dabei drehbar im Gehäuse in Lagern 2 und 5 gelagert.

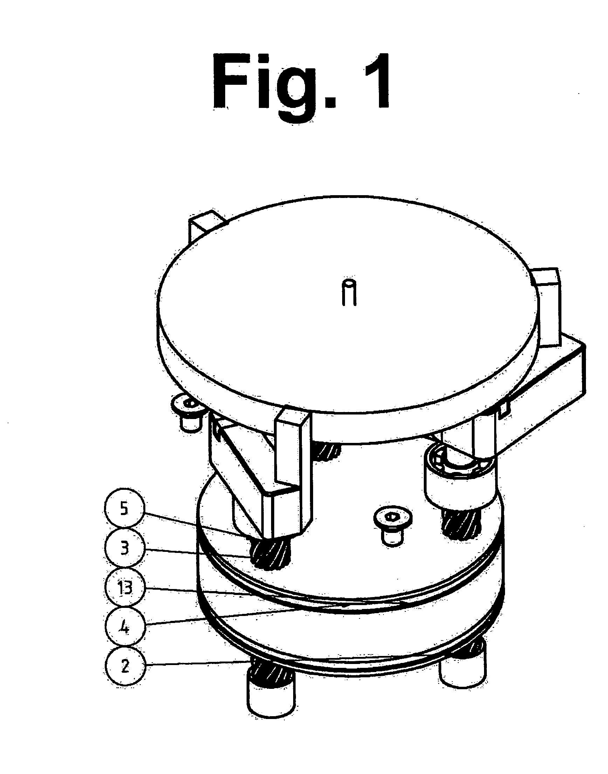

Bei beaufschlagen des Pneumatikkolbens 4 (Fig. 1, Pos.4) mit Druckluft wird der Kolben 4 linear bewegt. Dabei werden die drei Steilgewindespindeln 3 (Fig. 1, Pos.3) von den Steilgewinden im Kolben 4 gedreht. Dieses System ermöglicht es einen sehr großen Kolben 4 zu gestalten. Damit wird eine große Kolbenkraft erzeugt. Weiterhin wird durch die Kräftezerlegung an der Schräge des Steilgewindes der Spindeln 3 eine Kraftsteigerung ermöglicht.

Bei Greifern ist es wichtig über einen großen Bereich eine gleiche Spannkraft zu erzeugen.

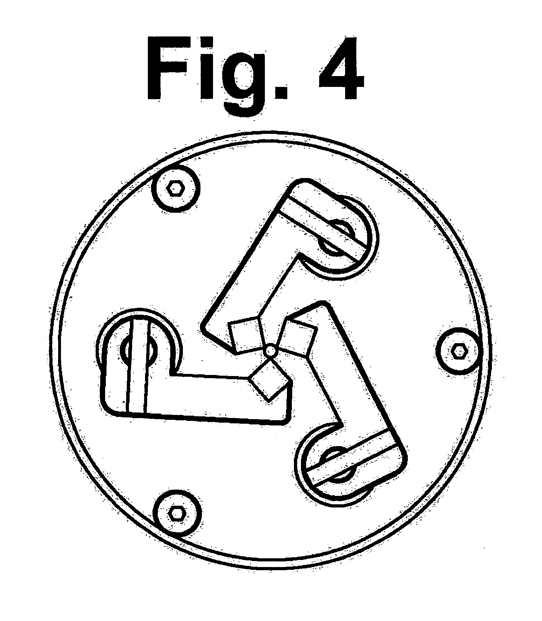

Bei der Ausführung der Klemmschwingen als der Klemmhebel 8 mit Spannpunkt in der Mitte des Greifers wirkt die Richtung der Spannkraft genau radial (Fig.4). Dadurch bleibt die Spannkraft bis zu Durchmessern von Werkstücken gleich dem Teilkreisdurchmesser eines durch die Gewindespindeln 3 verlaufenden Kreises fast völlig konstant. Damit können kleine und mittlere Durchmesser konstant gespannt werden.

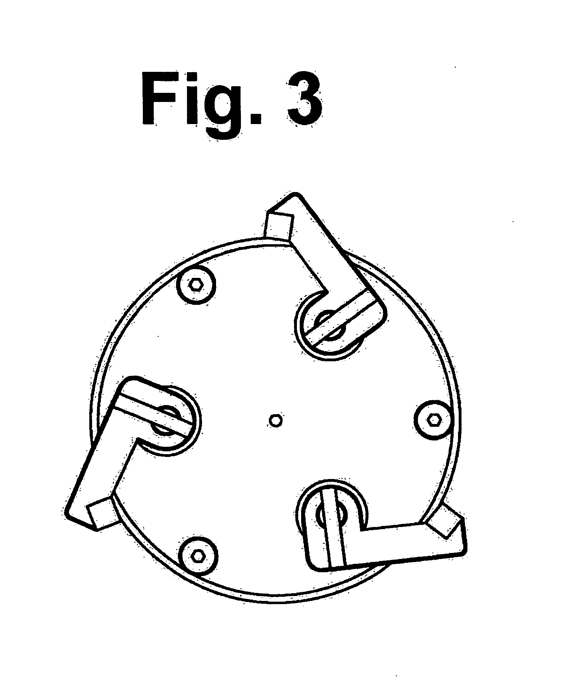

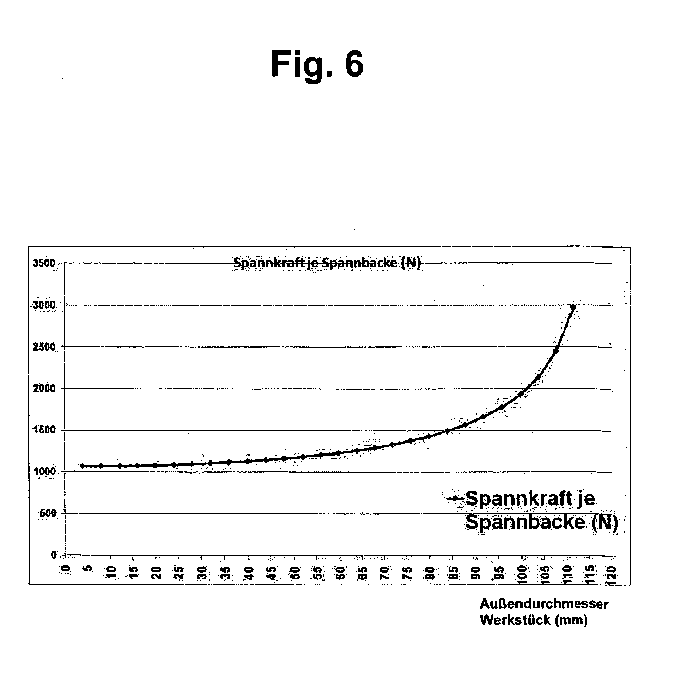

Bei den großen Durchmessern, größer als der Teilkreisdurchmesser eines durch die Gewindespindeln 3 verlaufenden Kreises, erfolgt eine weitere Kräftezerlegung aufgrund von kniehebelartig ausgebildeten Klemmschwingen 8 ähnlich einem Kniehebelsystem (Fig.3). Dadurch steigt die Spannkraft bei großen Durchmessern zusätzlich steil (Fig.6) an. Dieses ist besonders günstig da große Werkstücke auch größere Spannkräfte erfordern.

Mit dem gezeigten Beispiel ist es Möglich bei einem Außendurchmesser des Greifers vom 100mm einen Spannbereich von 0 bis 115mm Werkstückdurchmesser außengreifend zu spannen. Innengreifend können Ringe mit einem Spannbereich von ca. 10mm bis 125mm gespannt werden.

Die Figuren zeigen also einen Dreibackengreifer mit punktsymmetrisch geführten geschwenkten Spannbacken und einem sehr großen Spannbereich mit Werkstückdurchmesser von 0 bis fast vierfachem Hebelarm der Klemmschwingen.

Bei dem Greifer wird ein Kolben (Fig. 1, Pos. 4) verschoben der die durch den Kolben geführten Steilgewindespindeln (Fig. 1,Pos. 3) in Drehung bringt und damit die Klemmschwingen (Greiferbacken) mit großem Schenkwinkel schwenkt.

Der Greifer hat von 0 bis zu mittleren Durchmessern eine sehr konstante Spannkraft und bei den größeren Durchmessern eine stark ansteigende Spannkraft. Es wirken mehrere Systeme kraftverstärkend. Der Greifer ist kompakt gestaltet und besteht aus wenigen preiswerten Elementen.

### Bezugszeichenliste:

| Pos. | Benennung |
|---|---|
| 1 | Zylindergehäuse |
| 2 | Nadellager |
| 3 | Steilgewindespindel |
| 4 | Kolben |
| 5 | Kugellager |
| 6 | Zylinderdeckel |
| 7 | Schraube |
| 8 | Klemmschwinge (Greiferbacken) |
| 9 | Passfeder |
| 10 | Spannstift |
| 11 | Werkstück klein |
| 12 | Werkstück groß |
| 13 | O-Ring |
| 14 | Werkstück |

## Patentansprüche

1. Greifer mit in der Ebene des Radius bzw. des zu greifenden Werkstücks (14) schwenkenden Klemmschwingen (8) **dadurch gekennzeichnet, dass** mit den Klemmschwingen (8) drehgekoppelte Gewindespindeln (3) vorgesehen sind, die durch einen Innengewinde für die Gewindespindeln (3) vorsehenden Kolben (4) derart hindurchgeführt werden, dass bei einer axialer Bewegung des Kolbens (4) die Spindeln (3) zur Spannung des Werkstücks (14) in Drehung gebracht werden.

2. Greifer nach Anspruch 1, **dadurch gekennzeichnet, dass** gleichzeitig der Kolben (4) an einer Drehbewegung gehindert wird.

3. Greifer nach Anspruch 1 oder 2, **dadurch gekennzeichnet, dass** die Gewindespindeln (3) als Steilgewindespindeln und die Innengewinde als Innensteilgewinden ausgebildet sind.

4. Greifer nach Anspruch 1, 2 oder 3, **dadurch gekennzeichnet, dass** die Gewindespindeln (3) planetenartig um den Kolben (4) angeordnet sind.

5. Greifer nach einem der vorherigen Ansprüche, **dadurch gekennzeichnet, dass** drei äquidistant zueinander beanstandete Gewindespindeln (3) vorgesehen sind.

6. Greifer nach einem der vorherigen Ansprüche, **dadurch gekennzeichnet, dass** die Gewindespindeln (3) parallel zueinander verlaufend angeordnet sind.

7. Greifer nach einem der vorherigen Ansprüche, **dadurch gekennzeichnet, dass** die Gewindespindeln (3) bei einer axialen Bewegung des Kolbens (4) in die gleiche Drehrichtung verdreht werden.

8. Greifer nach einem der vorherigen Ansprüche, **dadurch gekennzeichnet, dass** der Kolben (4) durch Druckluft bewegbar ist.

9. Greifer nach einem der vorherigen Ansprüche, **dadurch gekennzeichnet, dass** der Hebelarm der Klemmschwingen (8) gleich dem Teilkreisradius eines durch die Gewindespindeln (3) verlaufenden Kreises ist, so dass die Richtung der Spannkraft am Angriffspunkt der Greiferbacken auf das Werkstücke (14) in der Mittenachse des Greifers radial liegt.

10. Greifer nach einem der vorherigen Ansprüche, **dadurch gekennzeichnet, dass** die Klemmschwingen (8) als Kniehebelsystem auf das Werkstück (14) wirken, so dass sie bei großen Werkstückdurchmessern eine Kraftsteigerung erzeugen.

## Claims

1. A gripper with clamp rockers (8) pivoting in the plane of the radius or of the workpiece (14) to be held, **characterized in that** threaded spindles (3) rotationally coupled with the clamp rockers (8) are provided, which are passed in such a manner through a piston (4) providing a female thread for the threaded spindles (3) that upon an axial motion of the piston (4), the spindles (3) are made to rotate, for clamping the workpiece (14).

2. The gripper according to claim 1, **characterized in that** simultaneously, the piston (4) is prevented from making a rotary motion.

3. The gripper according to claim 1 or 2, **characterized in that** the threaded spindles (3) are embodied as steep-lead-angle threaded spindles, and the female threads are embodied as steep-lead-angle female threads.

4. The gripper according to claim 1, 2 or 3, **characterized in that** the threaded spindles (3) are disposed in planetary fashion around the piston (4).

5. The gripper according to one of the foregoing claims, **characterized in that** three threaded spindles (3) spaced equidistantly from one another are provided.

6. The gripper according to one of the foregoing claims, **characterized in that** the threaded spindles (3) are disposed extending parallel to one another.

7. The gripper according to one of the foregoing claims, **characterized in that** upon an axial motion of the piston (4), the threaded spindles (3) are rotated in the same direction of rotation.

8. The gripper according to one of the foregoing claims, **characterized in that** the piston (4) is movable by compressed air.

9. The gripper according to one of the foregoing claims, **characterized in that** the lever arm of the clamp rockers (8) is equal to the pitch circle radius of a circle extending through the threaded spindles (3), so that the direction of the clamping force at the point of engagement point of the gripper jaws is radial to the workpiece (14) in the center axis of the gripper.

10. The gripper according to one of the foregoing claims, **characterized in that** the clamp rockers (8) act as a toggle lever system on the workpiece (14), so that for large workpiece diameters, they generate an increase in force.

## Revendications

1. Pince comprenant des bielles oscillantes de serrage (8) oscillant dans le plan du rayon ou de la pièce usinée à saisir (14), **caractérisée en ce qu'**il est prévu des broches filetées (3) couplées en rotation avec les bielles oscillantes de serrage (8), lesquelles broches traversent un piston (4) muni d'un taraudage intérieur pour les broches filetées (3), de sorte que lorsqu'on déplace axialement le piston (4), les broches (3) sont amenées en rotation en vue de venir serrer la pièce usinée (14).

2. Pince selon la revendication 1, **caractérisée en ce que** le piston (4) est en même temps empêché de tourner.

3. Pince selon la revendication 1 ou 2, **caractérisée en ce que** les broches filetées (3) sont réalisées sous la forme de broches filetées à pas rapide et le taraudage intérieur sous la forme d'un filet à pas rapide.

4. Pince selon la revendication 1, 2 ou 3, **caractérisée en ce que** les broches filetées (3) sont agencées de façon planétaire autour du piston (4).

5. Pince selon l'une des revendications précédentes, **caractérisée en ce qu'**il est prévu trois broches filetées (3) situées à égale distance les unes des autres.

6. Pince selon l'une des revendications précédentes, **caractérisée en ce que** les broches filetées (3) sont agencées en s'étendant parallèlement les unes aux autres.

7. Pince selon l'une des revendications précédentes, **caractérisée en ce que** les broches filetées (3), par un déplacement axial du piston (4), sont tournées dans le même sens de rotation.

8. Pince selon l'une des revendications précédentes, **caractérisée en ce que** le piston (4) peut être déplacé par de l'air comprimé.

9. Pince selon l'une des revendications précédentes, **caractérisée en ce que** le bras de levier des bielles oscillantes de serrage (8) est égal au rayon de cercle partiel d'un cercle s'étendant à travers les broches filetées (3), de sorte que le sens de la force de serrage au niveau du point d'attaque des mâchoires de pince sur la pièce usinée (14) dans l'axe médian de la pince est radial.

10. Pince selon l'une des revendications précédentes, **caractérisée en ce que** les bielles oscillantes de serrage (8) agissent à la manière d'un système de levier à genouillère sur la pièce usinée (14), de sorte que, en présence de grands diamètres de pièces, elles produisent une intensification de force.
